# FASCICULE DE BREVET EUROPEEN

(11) **EP 1 552 193 B1**
(45) Date de publication et mention de la délivrance du brevet: **30.08.2006**
(21) Numéro de dépôt: 03778380.0
(22) Date de dépôt: 01.10.2003
(51) Int. Cl.: F16J 15/02, A47F 3/04, E06B 7/23

(54) **VITRAGE ISOLANT INCORPORANT UN JOINT D'ETANCHEITE**
ISOLIERGLASSCHEIBE MIT EINER DICHTUNGSANORDNUNG
INSULATING GLASS COMPRISING A GASKET

(30) Priorité: 09.10.2002 FR 0212521; 26.03.2003 FR 0303684
(43) Date de publication de la demande: 13.07.2005
(73) Titulaire: SAINT-GOBAIN GLASS FRANCE, 92400 Courbevoie (FR)
(72) Inventeur: DURFIELD, Mark, Rutledge, GA-30663 (US); RIBLIER, Luc-Michel, Decatur, GA 30033 (US)
(74) Mandataire: Aupetit, Muriel J. C.
(86) Numéro de dépôt international: PCT/FR2003/002870
(87) Numéro de publication internationale: WO 2004/033940

(56) Documents cités:
- CH-A- 399 925
- DE-A- 19 628 034
- FR-A- 2 594 479
- GB-A- 1 554 941
- US-A- 5 584 143
- US-A- 5 622 414

## Description

L'invention concerne un joint d'étanchéité pouvant en particulier être associé à un vitrage isolant. Ce joint est particulièrement adapté à des vitrages isolants destinés à être utilisés dans des meubles réfrigérés mais l'utilisation de ce joint n'est nullement limitative, et peut s'appliquer à tous vitrages comportant un logement destiné à accueillir le joint de l'invention.

Des meubles réfrigérés sont par exemple des vitrines ou comptoirs frigorifiques dont les vitrages isolants constituent les façades en verre derrière lesquelles sont exposés des produits à consommer. Ces produits ou denrées devant être visibles par le consommateur sont périssables et nécessitent donc d'être conservées à une température adéquate en empêchant toute contamination bactériologique.

Les vitrages isolants de ces meubles réfrigérés sont souvent aboutés les uns aux autres, et les vitrages d'extrémité sont généralement accolés à une paroi latérale. Néanmoins, un espace suffisant doit être prévu entre deux vitrages et/ou un vitrage et une paroi latérale afin d'autoriser l'ouverture et la fermeture d'une vitrine pour pouvoir disposer ou retirer les produits ou encore nettoyer la vitrine, sans risquer de heurter le vitrage adjacent ou la paroi latérale. Il est bien entendu primordial d'assurer une étanchéité au niveau de cet espace de manière à établir l'isolation thermique entre l'intérieur réfrigéré de la vitrine et l'extérieur, de réduire les pertes thermiques et d'éviter depuis l'extérieur des vitrines, une contamination bactériologique des produits agencés à l'intérieur des vitrines.

L'étanchéité est alors réalisée par des joints fixés sur la périphérie des vitrages, chaque joint présentant une lèvre d'étanchéité qui recouvre la lèvre du joint du vitrage adjacent en position fermée des vitrines ou bien qui s'appuie contre la paroi latérale. Les joints sont régulièrement sollicités lors des ouvertures et fermetures fréquentes des vitrines, aussi, il est préférable qu'ils soient résistants à ces frottements grâce à leur fixation adéquate au vitrage, tout en pouvant être aisément désotidarises en vue de leur remplacement.

Les documents US 5 622 414 et US 5 584 143 proposent joint d'étanchéité pour ces types de meubles réfrigérés.

La façade d'un meuble réfrigéré est constituée d'un ou de plusieurs vitrages, généralement bombés, isolants qui comportent au moins deux feuilles de verre espacées l'une de l'autre par une lame d'air ou de gaz et maintenues écartées par un intercalaire, ainsi que des moyens d'étanchéité prévus pour assurer une étanchéité à la vapeur d'eau et à l'eau et/ou autres liquides entre l'intérieur et l'extérieur du vitrage.

Dans le document, US 5 622 414, l'intercalaire utilisé sur les parties latérales du double vitrage consiste en un profilé rigide creux et ouvert vers l'extérieur du vitrage qui comporte un fond en regard de la lame de gaz ou d'air, des parois latérales en regard des faces internes des feuilles de verre et une ouverture opposée au fond et donnant accès à la cavité interne du profilé au niveau des tranches des feuilles de verre. Les extrémités libres des parois latérales vers l'ouverture se terminent sous la forme d'une portion rétrécie telle qu'un étranglement.

Les moyens d'étanchéité du vitrage isolant consistent en une première barrière étanche à la vapeur d'eau, telle qu'un joint en butyle disposé entre les parois latérales de l'intercalaire et les faces internes des feuilles de verre, et en une seconde barrière étanche à l'eau et/ou à d'autres liquides telle qu'un polysulfure disposé entre la portion rétrécie de l'intercalaire et les faces internes des feuilles de verre.

Le joint associé à ce vitrage isolant comporte une première portion qui est maintenue insérée dans la cavité prévue dans le corps de l'intercalaire, et une autre portion agencée à l'extérieur de la cavité du profilé et en saillie du vitrage isolant pour coopérer avec un joint d'étanchéité d'un vitrage isolant adjacent.

Plus précisément, le joint de ce document qui est obtenu par extrusion comporte un tronc, une partie plate prolongeant le tronc, une nervure médiane située entre le tronc et la partie plate et des ailes partant du tronc de manière oblique en direction de la nervure médiane. Le tronc et la nervure médiane sont faits d'une matière plastique rigide d'une dureté d'environ 75 à 80 Shore A de manière à assurer leur insertion dans la cavité de l'intercalaire, en particulier au niveau de l'étranglement, et de positionner correctement le joint. Les ailes et la partie plate sont réalisées dans une matière plastique flexible d'une dureté d'environ 65 Shore A de façon à assurer leur flexion lors de l'insertion en force du tronc dans la cavité, en particulier au niveau de l'étranglement, et à assurer une flexibilité adaptée pour la partie plate qui est destinée à coopérer avec une partie plate d'un joint d'un vitrage isolant adjacent.

Cependant, ce joint n'apparaît pas comme une solution pleinement satisfaisante. En effet, ce joint est nécessairement associé à l'intercalaire du vitrage isolant de la vitrine, cet intercalaire devant présenter une forme spécifique, ce qui demande de fabriquer des intercalaires spéciaux pour ces vitrages isolants, engendrant des coûts de production supplémentaires.

Par ailleurs, si la nervure médiane n'obture pas correctement l'ouverture de l'intercalaire, le risque de contamination et prolifération bactériologique dans la cavité de l'intercalaire est possible, ce qui n'est pas concevable pour ce type de vitrages isolants utilisés dans des meubles réfrigérés destinés à la commercialisation de denrées alimentaires.

En outre, le joint est réalisé en au moins deux matières plastiques distinctes, une rigide et l'autre plus flexible, ce qui engendre des moyens de fabrication plus complexes que si le joint était obtenu à partir d'un seul matériau, et ne participe donc pas à un prix de revient aussi économique que possible.

Enfin, les moyens d'étanchéité du vitrage isolant, que sont en particulier le polysulfure, sont apparents sur la tranche du vitrage, ce qui procure un aspect inesthétique qui peut se traduire chez les clients par un sentiment de non propreté de la vitrine.

L'invention a donc pour but de fournir un joint d'étanchéité qui ne présente pas les inconvénients de l'art antérieur, et un vitrage isolant comportant un logement d'accueil, le vitrage isolant étant incorporé en particulier dans des meubles réfrigérés.

Selon l'invention, le vitrage isolant comporte au moins deux feuilles de verre espacées par une lame de gaz ou d'air, un intercalaire maintenant écartées les feuilles de verre et disposé en retrait par rapport aux tranches des feuilles de verre de façon à ménager une gorge réalisant le logement d'accueil dont le fond constitue une face de l'intercalaire. Le joint comprend un corps d'axe longitudinal X qui comporte une embase présentant une première extrémité et une seconde extrémité opposée, deux parois latérales opposées reliant les deux extrémités, et deux épaulements situés de part et d'autre de chacune des deux parois latérales et au niveau de l'une des extrémités ; il est constitué d'un unique matériau flexible, et selon une coupe perpendiculaire à l'axe X, la largeur de l'embase d'une paroi latérale à l'autre, à proximité de l'une des extrémités, est plus importante que la largeur de l'embase d'une paroi latérale à l'autre, à proximité de l'extrémité opposée. L'embase du joint est alors logée dans la gorge et maintenue dans celle-ci par compression, les épaulements reposant en butée contre les tranches des feuilles de verre.

On entend par matériau flexible, un matériau qui est apte à être comprimé à la main, en particulier pour ici réduire la largeur de l'embase afin de réaliser l'insertion du joint dans un espace de section plus étroite à la section de l'embase lorsqu'elle n'est pas comprimée.

Avantageusement, ce matériau flexible présente une dureté comprise entre 40 et 60 Shore A. Ce matériau est une matière plastique du type silicone, butyle, EPDM, hypalon, caoutchouc naturel, néoprène, nitrile, polybutadiène, polyisoprène, polyuréthanne, SBR, viton.

Selon une caractéristique, la section propre de l'embase, selon la coupe perpendiculaire à l'axe X et délimitée par l'extrémité opposée aux épaulements, les parois latérales et une ligne finie L parallèle aux extrémités et reliant les extrémités des parois latérales au niveau des épaulements, est inscrite dans une section de référence de forme trapézoïdale dont la grande base est confondue avec l'extrémité opposée aux épaulements, et la petite base est confondue avec la ligne L.

Selon une variante, la section de référence de l'embase est de forme trapézoïdale.

Selon une autre variante, la section de référence de l'embase est de forme sensiblement carrée ou rectangulaire, les extrémités des parois latérales au niveau des épaulements présentant un décrochement vers l'intérieur du joint.

Selon encore une autre variante, les deux parois latérales de l'embase comportent des saillies latérales parallèles les unes aux autres et inclinées en direction des épaulements, et agencées vers l'extrémité opposée aux épaulements.

Selon une autre caractéristique, l'embase est pleine. En variante, elle peut comporter un évidemment intérieur.

Selon une autre caractéristique, le joint comporte une lèvre d'étanchéité s'étendant depuis l'extrémité de l'embase qui se trouve du côté des épaulements. Cette lèvre peut être pleine et présenter une section de forme oblongue et sensiblement plate, ou elle peut être tubulaire.

De préférence, les épaulements présentent à leurs extrémités libres une épaisseur réduite par rapport à celle de leurs portions débutantes depuis les extrémités des parois latérales.

Selon une caractéristique, le corps de l'embase présente, au moins du côté de son extrémité opposée aux épaulements, une largeur sensiblement plus importante que la largeur du logement.

Le vitrage isolant peut par exemple être utilisé dans un meuble réfrigéré.

De préférence, des moyens d'étanchéité vis-à-vis de l'intérieur du vitrage couvrent le fond de la gorge et éventuellement une partie des parois latérales de la gorge constituées par les faces internes des feuilles de verre, le corps de l'embase du joint coopérant par frottement avec les moyens d'étanchéité.

Le vitrage peut être plat ou bombé.

D'autres avantages et caractéristiques de l'invention apparaîtront dans la suite de la description en regard des dessins annexés sur lesquels :
- la figure 1 illustre une vue partielle en coupe d'un vitrage isolant auquel est associé le joint de l'invention;
- la figure 2 illustre une vue de profil d'un meuble réfrigéré incorporant deux vitrages isolants auxquels sont associés des joints de l'invention ;
- la figure 3 est vue de profil du joint de l'invention selon un mode préféré de réalisation;
- les figures 4 à 9 sont des vues en coupe selon des modes de réalisation distincts du joint de l'invention.
- la figure 10 est une vue en coupe partielle de deux vitrages isolants adjacents incorporant des joints de l'invention.

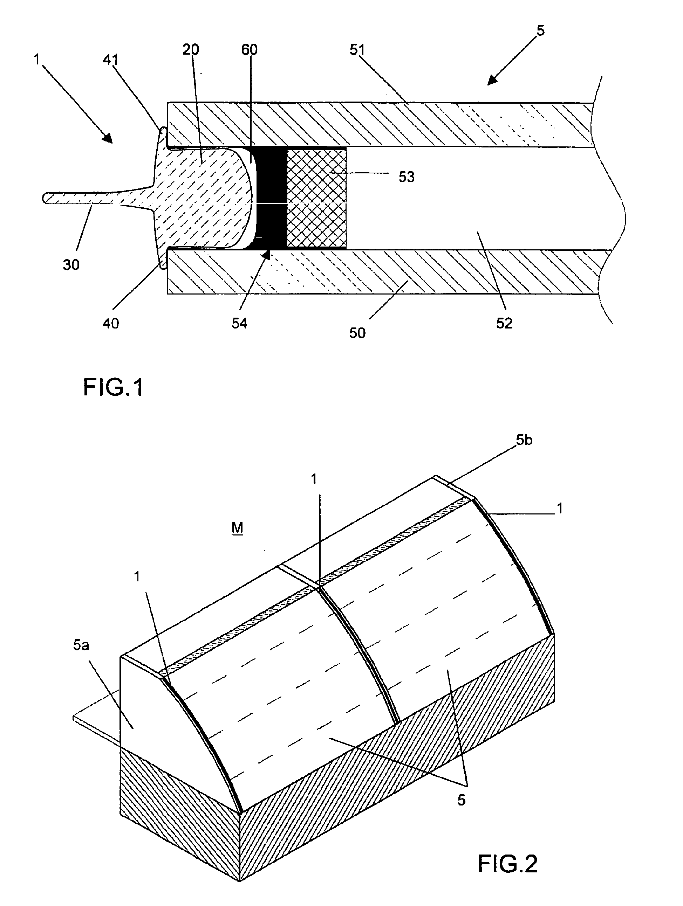

Sur la figure 1, le joint 1 de l'invention est à titre d'exemple associé à un vitrage isolant 5 qui est destiné à être incorporé dans un meuble réfrigéré M tel que visible sur la figure 2.

Comme illustré sur la figure 2, l'étanchéité entre deux vitrages isolants 5 aboutés l'un à l'autre est réalisée aux moyens de deux joints 1 selon l'invention associés respectivement aux deux vitrages isolants; de même que l'étanchéité entre chacun des vitrages isolants 5 avec chaque paroi latérale du meuble, respectivement 5a et 5b, est réalisée avec un joint 1 de l'invention.

Le vitrage isolant illustré partiellement en coupe sur la figure 1 comporte deux feuilles de verre 50 et 51 séparées par une lame d'air ou de gaz 52, un intercalaire ou cadre entretoise 53 qui sert à maintenir écartées les deux feuilles de verre, et des moyens d'étanchéité 54 qui réalisent l'étanchéité de l'intérieur des feuilles de verre vis-à-vis de l'extérieur.

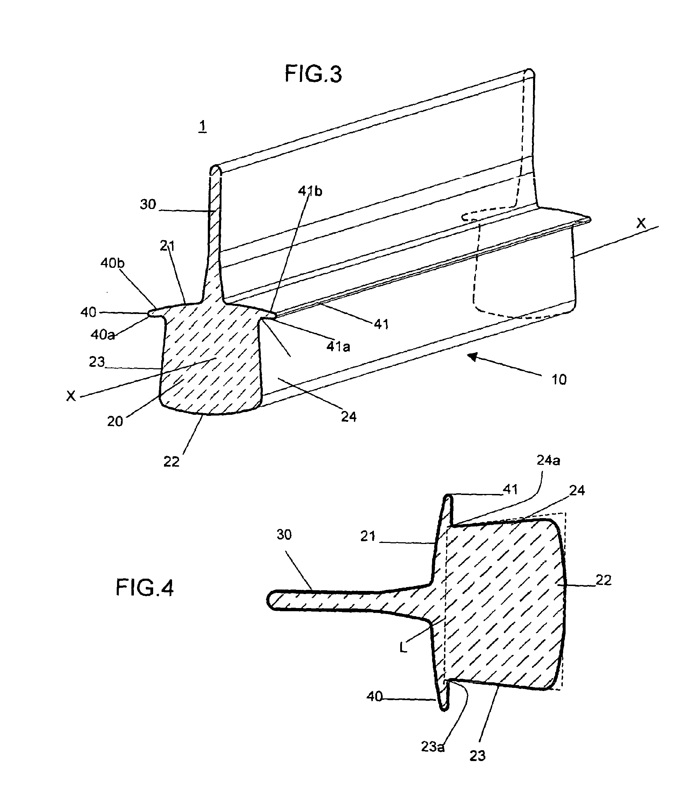

On distingue sur la figure 3 que le joint 1 comprend un corps 10 longitudinal d'axe X qui comporte une embase 20, deux épaulements 40 et 41, et de manière optionnelle selon la destination du joint, une lèvre d'étanchéité 30.

Le corps 10 est obtenu par extrusion et constitué d'un seul matériau flexible, plus particulièrement d'une matière plastique, telle que du silicone par exemple, d'une dureté comprise entre 40 et 60 Shore A, et de préférence de 50 Shore A. On reviendra plus loin sur les propriétés de la matière plastique.

L'embase 20 du corps est destinée à être insérée dans un logement d'accueil 60 du vitrage isolant (figure 1), la forme et les dimensions de l'embase étant adaptées pour maintenir le joint en place dans le logement d'accueil sans nécessiter l'utilisation de moyens de fixation additionnels tels que des moyens de collage et sans nécessiter une coopération avec l'intercalaire du vitrage isolant.

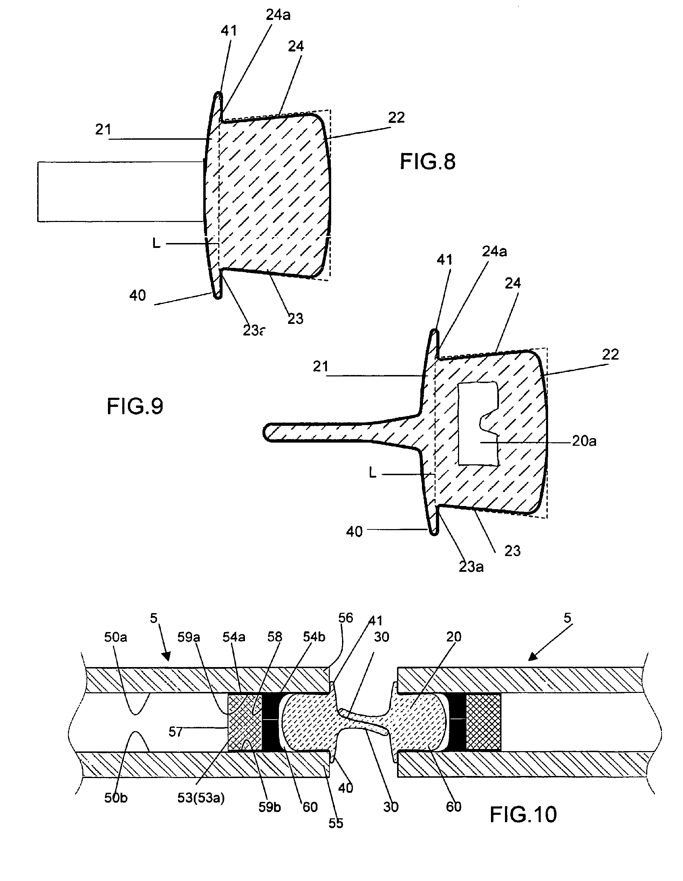

L'embase 20 est de préférence pleine (figures 3 à 8) pour éviter tout risque de contamination bactériologique à l'intérieur du joint. Néanmoins, pour gagner en matériau et donc en coût de fabrication et/ou selon la destination du joint, en particulier si au moins l'une de ses extrémités libres du joint doit coopérer avec un élément en saillie, il est possible de réaliser une embase avec un évidemment intérieur 20a de forme définie (figure 9) qui peut ainsi, soit coopérer avec un élément en saillie de forme complémentaire à l'évidemment, soit être bouché aux deux extrémités du joint, une fois celui-ci fourni aux dimensions voulues pour son insertion dans le vitrage.

L'embase comporte une première extrémité 21 et une seconde extrémité opposée 22, deux parois latérales opposées 23, 24 qui relient les deux extrémités et qui sont de même dimension ou de dimension sensiblement équivalente de manière à assurer une stabilité du joint lorsque celui-ci est associé au vitrage isolant, ainsi que deux épaulements 40, 41 qui sont situés de part et d'autre des parois latérales et au niveau des extrémités 23a, 24a des parois latérales reliées à l'extrémité 22.Selon l'invention, en coupe perpendiculaire à l'axe X, la largeur de l'embase à proximité de l'extrémité 22 opposée aux épaulements est plus importante que la largeur de l'embase à proximité de l'extrémité opposée 21.

En particulier, la section de l'embase qui est donnée selon la coupe perpendiculaire à l'axe X et qui est délimitée par l'extrémité 22 opposée aux épaulements, par les parois latérales 23, 24 et par une ligne finie L parallèle aux extrémités 21, 22 et reliant les extrémités 23a, 24a des parois latérales, est inscrite dans une section de forme trapézoïdale (illustrée en pointillés sur les figures 4 à 9) dont la grande base est confondue avec l'extrémité 22 opposée aux épaulements, et la petite base est confondue avec la ligne L.

La lèvre d'étanchéité 30 du joint est présente lorsqu'il s'agit grâce à ce joint d'assurer l'étanchéité entre deux vitrages isolants aboutés l'un à l'autre et/ou entre un vitrage isolant et une paroi latérale. Néanmoins, elle peut être omise lorsqu'il s'agit d'assurer une étanchéité simple ou complémentaire du vitrage isolant sans frottement avec un élément adjacent. La figure 8 illustre un exemple de réalisation du joint sans lèvre d'étanchéité.

Selon un premier mode de réalisation et préféré de l'invention, la section propre de l'embase 20 selon une coupe perpendiculaire à l'axe X est de forme sensiblement trapézoïdale (figures 3, 4 , 8 et 9), l'extrémité 22 de l'embase constituant la grande base du trapèze tandis que la ligne L constitue la petite base, l'extrémité 22 étant plus large que la largeur du logement dans lequel est destiné à être inséré l'embase.

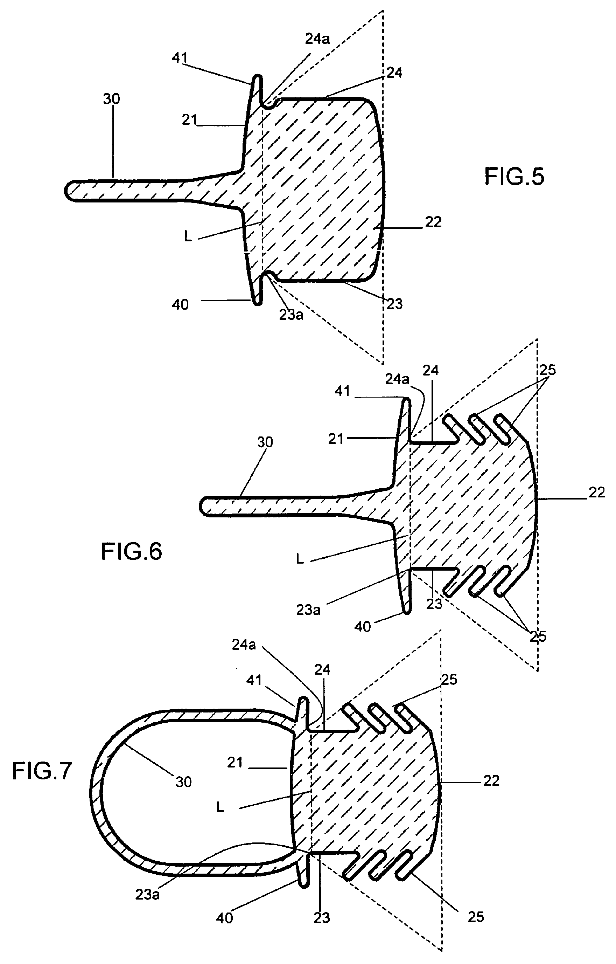

Selon un deuxième mode de réalisation, la section propre de l'embase est de forme sensiblement carrée ou rectangulaire jusqu'aux extrémités 23a, 24a des parois latérales au niveau des épaulements (figure 5), les extrémités opposées 21 et 22 étant sensiblement perpendiculaires avec les parois latérales 23, 24. Les largeurs des extrémités 21 et 22 sont équivalentes et sont de dimension sensiblement plus grande que la largeur du logement d'accueil. Dans ce mode de réalisation, les extrémités 23a, 24a se terminent par un décrochement orienté vers l'intérieur du joint, de façon que la matière de l'embase destinée à être comprimée dans le logement d'accueil pourra être répartie dans ces décrochements, ce qui n'entraînera aucune déformation des épaulements 40 et 41.

Selon un troisième mode de réalisation, la section propre de l'embase selon une coupe perpendiculaire à l'axe X est de forme sensiblement carrée ou rectangulaire (figures 6 et 7), les extrémités opposées 21 et 22 étant sensiblement perpendiculaires avec les parois latérales 23, 24. La largeur des extrémités 21 et 22 est sensiblement identique à la largeur du logement d'accueil dans lequel l'embase est destinée à être insérée. En outre, l'embase comporte des saillies latérales 25 agencées sur les parois latérales 23, 24, ces saillies, parallèles les unes aux autres, étant inclinées en direction de l'extrémité 21 et des épaulements 40, 41 à la manière de branches d'un sapin. Les saillies 25 sont positionnées vers l'extrémité 22 de l'embase opposée aux épaulements 40, 41. La grandeur séparant les extrémités de deux saillies 25 sur les deux parois respectives 23 et 24 est de dimension plus importante que la largeur du logement d'accueil.

Quant à la lèvre 30, elle peut être pleine et plate et de forme oblongue (figures 4, 5 et 6). Elle part de préférence du milieu de l'extrémité 21 de l'embase.

En variante, la lèvre peut être tubulaire (figure 7) et présenter une forme oblongue telle qu'illustrée, ou bien une forme circulaire. Elle est solidaire de l'extrémité 21 de l'embase en deux points distincts. Avantageusement, la section de la lèvre est adaptée pour être la plus flexible possible.

L'association du joint de l'invention avec un vitrage isolant va à présent être décrite en référence à la figure 10 pour laquelle deux vitrages 5 sont aboutés.

L'intercalaire 53 du vitrage isolant est généralement constitué d'un profilé métallique ou en matière composite qui est creux et rempli d'un tamis moléculaire 53a ou dessicant ayant notamment pour rôle d'absorber les molécules d'eau emprisonnées dans la lame d'air au moment de la fabrication du vitrage et qui seraient susceptibles de se condenser lors de l'utilisation du vitrage dans une atmosphère froide, entraînant l'apparition de buée.

L'intercalaire 53 est disposé sur la périphérie du vitrage et est en retrait par rapport aux tranches 55, 56 des feuilles de verre de façon à créer une gorge qui constitue le logement d'accueil 60 dans lequel est destinée à être insérée l'embase du joint. L'intercalaire comprend une face interne 57 en regard de la lame d'air, une face opposée externe 58 qui constitue le fond de la gorge 60, et des faces latérales opposées 59a, 59b disposées contre les faces internes 50a et respectivement 50b des feuilles de verre.

L'intercalaire est fixé aux feuilles de verre, par exemple par le collage des faces latérales 59a, 59b aux faces 50a et 50b des feuilles de verre au moyen d'un matériau de solidarisation 54a tel que du butyle. Le matériau 54a en butyle constitue en outre une partie des moyens d'étanchéité 54 pour l'étanchéité à la vapeur d'eau.

Pour des vitrages bombés, il est généralement plus commode de recourir en variante à un intercalaire composite imprégné de dessicant. Ces intercalaires ont en effet la particularité d'être très souples et sont par conséquent bien adaptés à une mise en oeuvre sur des verres bombés.

Un tel intercalaire est par exemple commercialisé sous le dénomination Swiggle Strip par les sociétés TREMCO et TRUSEAL. Il se présente sous la forme d'un ruban pré-extrudé à base de butyle contenant du tamis moléculaire et auquel est intégrée une âme métallique jouant le rôle d'intercalaire et de barrière à la vapeur d'eau. Le butyle assure les fonctions de collage et d'étanchéité à la vapeur d'eau contre les faces 50a et 50b des feuilles de verre.

Un autre exemple d'intercalaire est le Super Spacer commercialisé par la société EDGETECH. Il s'agit cette fois d'une mousse en silicone flexible imprégnée de dessicant. La face externe 58 de l'intercalaire est rendue étanche par un film métallisé et le collage ainsi que l'étanchéité aux faces 50a et 50b des feuilles de verre sont alors réalisés par un adhésif acrylique intégré à l'intercalaire.

Les moyens d'étanchéité 54 comprennent, en plus du butyle 54a ou de l'adhésif réalisant l'étanchéité à la vapeur d'eau, un matériau 54b assurant l'étanchéité à l'eau et aux autres liquides. Le matériau 54b est appliqué dans la gorge 60, au moins contre la face externe 58 de l'intercalaire et éventuellement contre les faces internes 50a et 50b des feuilles de verre.

Ce matériau 54b est par exemple un polysulfure ou un polyuréthanne ou tout autre matériau connu assurant le rôle d'étanchéité aux liquides.

Le joint 1 est associé au vitrage, de sorte que l'embase 20 est logée dans la gorge 60. Le corps de l'embase 20 présente du côté de son extrémité 22 destinée à être reçue dans le fond de la gorge 60 une largeur de dimension sensiblement plus grande que la largeur de la gorge. Selon les premier et deuxième modes de réalisation de l'embase, il s'agit exactement de la largeur de l'extrémité 22 correspondant à la grande base de la forme trapézoïdale dans laquelle est inscrite la section propre de l'embase. Selon le troisième mode de réalisation de l'embase, il s'agit exactement de la largeur correspondant à la grandeur séparant les extrémités de deux saillies 25 disposées respectivement sur les deux parois latérales 23, 24. Ainsi, la déformation résultant de la compression de l'embase lors de son insertion permet de minimiser la déformation des épaulements 40, 41 et de la lèvre d'étanchéité 30.

Cette largeur plus importante de l'embase vis-à-vis de son logement d'accueil qui est la gorge nécessite que l'embase soit apte à être comprimée, ce qui est le cas par la teneur de son matériau. L'insertion de l'embase par compression engendre une fois en place un effet de ressort qui augmente les forces de frottement entre le joint et les faces internes du vitrage de manière à maintenir fermement en position le joint malgré des sollicitations ultérieures telles que les frottements avec d'autres joints qui auront tendance à tirer l'embase vers l'extérieur de la gorge.

Les faces internes 50a, 50b des feuilles de verre qui sont plutôt lisses peuvent éventuellement être recouvertes du matériau d'étanchéité 54b afin d'augmenter encore la résistance au frottement avec le matériau du joint, et maximiser ainsi l'effet de ressort à la compression.

Une fois l'embase en position, les épaulements 40, 41 sont destinés à venir en butée contre les tranches 55 et 56 du vitrage de façon à recouvrir parfaitement la gorge 60 du vitrage dans laquelle est insérée l'embase 20, ce qui assure une étanchéité parfaite de la gorge et évite toutes contaminations et proliférations bactériologiques dans celle-ci.

Par ailleurs, les épaulements 40, 41 recouvrent suffisamment les tranches des feuilles de verre pour ne pas rendre visible les moyens d'étanchéité 54, rendant un aspect net au côté du vitrage auquel est associé le joint.

En outre, lorsque ce joint est utilisé sur des vitrages bombés présentant des rayons de courbure relativement petits, les épaulements subissent des contraintes de déformation, l'un étant étiré tandis que l'autre est comprimé. Pour minimiser ces contraintes, l'épaisseur des extrémités libres 40a, 41 a des épaulements est avantageusement réduite par rapport à l'épaisseur des portions débutantes 40b, 41 b des épaulements au niveau de l'extrémité 21 de l'embase (figure 3).

Quant à la lèvre d'étanchéité 30, elle se trouve en saillie des tranches des feuilles de verre pour être appliquée contre une paroi latérale 5a ou 5b (figure 2) ou bien pour coopérer avec une autre lèvre d'étanchéité 30, l'une des lèvres recouvrant l'autre tel qu'illustré sur la figure 10.

L'ensemble des éléments du corps 10 du joint étant sollicité lors de l'association du joint au vitrage et ultérieurement lors des ouvertures et fermetures répétées d'une vitrine, le matériau unique formant le corps est choisi de manière adaptée.

En effet, ce matériau doit être suffisamment compressible pour créer l'effet ressort de l'embase dans la gorge et maintenir le joint fermement lors de sollicitations ultérieures. Il doit être d'une flexibilité adaptée pour que les épaulements et la lèvre d'étanchéité, éléments en dehors du vitrage, suivent le contour du vitrage, en particulier au niveau de courbures du vitrage lorsque celui-ci est bombé, sans se tordre s'il est trop flexible ou se fendre s'il est trop rigide. La flexibilité permet également à la lèvre d'étanchéité de coopérer aisément avec une autre lèvre adjacente pour assurer un recouvrement.

Enfin, ce matériau doit vieillir durablement pour que la lèvre d'étanchéité soit résistante à ses multiples sollicitations dans le temps.

Des exemples de matériau remplissant ces propriétés sont à titre d'exemples non limitatifs : le butyle, l'EPDM, l'hypalon, le caoutchouc naturel, le néoprène, le nitrile, le polybutadiène, le polyisoprène, le polyuréthanne, le silicone, le SBR, le viton.

De préférence, on choisit du silicone d'une dureté de 50 Shore A qui répond d'une part aux critères de compressibilité et flexibilité nécessaires et d'autre part, aux normes internationales, en matière de contact alimentaire, et qui garde en outre toutes ses propriétés aux températures d'utilisation dans des meubles réfrigérés entre -10°C et 70°C, le silicone restant inerte entre -70°C et 300°C.

Bien entendu, il est possible à tout moment de pouvoir retirer le joint hors de la gorge du vitrage pour le changer par exemple. Il suffit de tirer fortement sur la lèvre d'étanchéité, la force fournie pour son arrachement étant supérieure à celle exercée lorsque le joint est sollicité lors de l'ouverture de la vitrine.

## Revendications

1. Vitrage (5) comportant un logement d'accueil (60) et joint d'étanchéité (1),
- le vitrage étant isolant et comporte au moins deux feuilles de verre (50, 51) espacées par une lame de gaz ou d'air (52), un intercalaire (53) maintenant écartées les feuilles de verre et disposé en retrait par rapport aux tranches (55, 56) des feuilles de verre de façon à ménager une gorge réalisant le logement d'accueil (60) dont ie fond constitue une face (58) de l'intercalaire,
- le joint d'étanchéité (1) comprenant un corps (10) d'axe longitudinal X qui comporte une embase (20) présentant une première extrémité (21) et une seconde extrémité opposée (22), deux parois latérales opposées (23, 24) reliant les deux extrémités (21 ,22), et deux épaulements (40, 41) situés de part et d'autre de chacune des deux parois latérales et au niveau de l'une des extrémités (21), le joint étant constitué d'un unique matériau flexible, et selon une coupe perpendiculaire à l'axe X, la largeur de l'embase, d'une paroi latérale à l'autre, à proximité de l'extrémité (22) opposée aux épaulements (40, 41) étant plus importante que la largeur de l'embase, d'une paroi latérale à l'autre, à proximité de l'extrémité (21) proche des épaulements (40, 41),
**caractérisés en ce que** l'embase (20) du joint (1) est logée dans la gorge réalisant le logement d'accueil (60) et maintenue dans celle-ci par compression, les épaulements (40, 41) reposant en butée contre les tranches (55, 56) des feuilles de verre.

2. Vitrage et joint selon la revendication 1, **caractérisés en ce que** la section propre de l'embase, selon la coupe perpendiculaire à l'axe X et délimitée par l'extrémité (22) opposée aux épaulements, les parois latérales (23, 24) et une ligne finie L parallèle aux extrémités (21, 22) et reliant les extrémités des parois latérales (23a, 24a) au niveau des épaulements (40, 41), est inscrite dans une section de référence de forme trapézoïdale dont la grande base est confondue avec l'extrémité (22) opposée aux épaulements, et la petite base est confondue avec la ligne L.

3. Vitrage et joint selon la revendication 2, **caractérisés en ce que** ladite section de l'embase est de forme trapézoïdale.

4. Vitrage et joint selon la revendication 2, **caractérisés en ce que** ladite section de l'embase est de forme sensiblement carrée ou rectangulaire, les extrémités (23a, 24a) des parois latérales au niveau des épaulements présentant un décrochement vers l'intérieur du joint.

5. Vitrage et joint selon la revendication 2, **caractérisés en ce que** les deux parois latérales (23, 24) comportent des saillies latérales (25) parallèles les unes aux autres et inclinées en direction des épaulements (40, 41), et agencées vers l'extrémité (22) opposée aux épaulements.

6. Vitrage et joint selon l'une des revendications 1 à 5, **caractérisés en ce que** l'embase (20) est pleine.

7. Vitrage et joint selon l'une des revendications 1 à 5, **caractérisés en ce que** le l'embase (20) comporte un évidemment intérieur (20a).

8. Vitrage et joint selon l'une quelconque des revendications précédentes,
**caractérisés en ce qu'**il comporte une lèvre d'étanchéité (30) s'étendant depuis l'extrémité (21) de l'embase qui se trouve du côté des épaulements (40, 41).

9. Vitrage et joint selon la revendication 8, **caractérisés en ce que** la lèvre d'étanchéité (30) est pleine et présente une section de forme oblongue et sensiblement plate.

10. Vitrage et joint selon la revendication 8, **caractérisés en ce que** la lèvre d'étanchéité (30) est tubulaire.

11. Vitrage et joint selon l'une des revendications précédentes, **caractérisés en ce que** les épaulements (40, 41) présentent à leurs extrémités libres (40a, 41 a) une épaisseur réduite par rapport à celle de leurs portions débutantes (40b, 41 b) depuis les extrémités (23a, 24a) des parois latérales.

12. Vitrage et joint selon l'une des revendications précédentes, **caractérisés en ce que** le matériau du corps (10) présente une dureté comprise entre 40 et 60 Shore A.

13. Vitrage et joint selon la revendication 12, **caractérisés en ce que** le matériau est une matière plastique du type silicone, butyle, EPDM, hypalon, caoutchouc naturel, néoprène, nitrile, polybutadiène, polyisoprène, polyuréthanne, SBR, viton.

14. Vitrage et joint selon l'une quelconque des revendications précédentes, **caractérisés en ce que** le corps (10) de l'embase présente, au moins du côté de son extrémité (22) opposée aux épaulements (40, 41), une largeur sensiblement plus importante que la largeur du logement (60).

15. Vitrage et joint selon l'une quelconque des revendications précédentes,
**caractérisés en ce que** des moyens d'étanchéité (54) vis-à-vis de l'intérieur du vitrage couvrent le fond (58) de la gorge et éventuellement une partie des parois latérales (50a, 50b) de la gorge constituées par les faces internes des feuilles de verre, le corps de l'embase (20) du joint coopérant par frottement avec les moyens d'étanchéité (54).

16. Vitrage et joint selon l'une quelconque des revendications précédentes,**caractérisés en qu'**il est plat ou bombé.

17. Meuble réfrigéré comportant au moins un vitrage et joint selon l'une des revendications 1 à 16.

## Claims

1. Glazing panel (5) comprising a housing (60) and a seal (1),
- the glazing panel being insulating and comprising at least two glass panes (50, 51) spaced apart by a gas or air layer (52), a spacer (53) keeping the glass panes apart and being placed set back from the edges (55, 56) of the glass panes so as to leave a groove forming the housing (60), the bottom of which constitutes one face (58) of the spacer,
- the seal (1) comprising a body (10) of longitudinal axis X which comprises a base-piece (20) having a first end (21) and an opposed second end (22), two opposed side walls (23, 24) connecting the two ends (21, 22), and two shoulders (40, 41) located on either side of each of the two side walls and at one (21) of the ends, the seal being made of a single flexible material and in, in a section perpendicular to the X axis, the width of the base-piece, from one side wall to the other, in the vicinity of the end (22) on the opposite side from the shoulders (40, 41) being larger than the width of the base-piece, from one side wall to the other, in the vicinity of the end (21) near the shoulders (40, 41),
**characterized in that** the base-piece (20) of the seal (1) is housed in the groove providing the housing (60) and held therein by compression, and the shoulders (40, 41) butting against the edges (55, 56) of the glass panes.

2. The glazing panel and the seal as claimed in claim 1, **characterized in that** the actual cross section of the base-piece, in the section perpendicular to the X axis and bounded by the end (22) on the opposite side from the shoulders, the side walls (23, 24) and a finite line L parallel to the ends (21, 22) and connecting the ends of the side walls (23a, 24a) at the shoulders (40, 41), lies within a reference cross section of trapezoidal shape, the large base of which merges with the end (22) on the opposite side from the shoulders and the small base of which merges with the line L.

3. The glazing panel and the seal as claimed in claim 2, **characterized in that** said cross section of the base-piece is of trapezoidal shape.

4. The glazing panel and the seal as claimed in claim 2, **characterized in that** said cross section of the base-piece is of approximately square or rectangular shape, the ends (23a, 24a) of the side walls at the shoulders having a recess toward the inside of the seal.

5. The glazing panel and the seal as claimed in claim 2, **characterized in that** the two side walls (23, 24) include mutually parallel lateral projections (25) that are inclined toward the shoulders (40, 41) and placed toward the end (22) on the opposite side from the shoulders.

6. The glazing panel and the seal as claimed in one of claims 1 to 5, **characterized in that** the base-piece (20) is solid.

7. The glazing panel and the seal as claimed in one of claims 1 to 5, **characterized in that** the base-piece (20) includes an internal cavity (20a).

8. The glazing panel and the seal as claimed in any one of the preceding claims, **characterized in that** it includes a sealing lip (30) extending from the end (21) of the base-piece lying on the same side as the shoulders (40, 41).

9. The glazing panel and the seal as claimed in claim 8, **characterized in that** the sealing lip (30) is solid and has a cross section of oblong and approximately flat shape.

10. The glazing panel and the seal as claimed in claim 8, **characterized in that** the sealing lip (30) is tubular:

11. The glazing panel and the seal as claimed in one of the preceding claims, **characterized in that** the shoulders (40, 41) have, at their free ends (40a, 41a), a smaller thickness than the portions (40b, 41b) that start from the ends (23a, 24a) of the side walls.

12. The glazing panel and the seal as claimed in one of the preceding claims, **characterized in that** the material of the body (10) has a Shore A hardness of between 40 and 60.

13. The glazing panel and the seal as claimed in claim 12, **characterized in that** the material is a plastic of the silicone, butyl, EPDM, Hypalon, natural rubber, Neoprene, nitrile, polybutadiene, polyisoprene, polyurethane, SBR or Viton type.

14. The glazing panel and the seal as claimed in any one of the preceding claims, **characterized in that** the body (10) of the base-piece has, at least at its end (22) on the opposite side from the shoulders (40, 41), a substantially larger width than the width of the housing (60).

15. The glazing panel and the seal as claimed in any one of the preceding claims, **characterized in that** means (54) for sealing the inside of the glazing panel cover the bottom (58) of the groove and possibly one part of the side walls (50a, 50b) of the groove that are formed by the internal faces of the glass panes, the body of the base-piece (20) of the seal cooperating frictionally with the sealing means (54).

16. The glazing panel and the seal as claimed in any one of the preceding claims, **characterized in that** it is flat or curved.

17. A refrigerated cabinet comprising at least one glazing panel and seal as claimed in one of claims 1 to 16.

## Patentansprüche

1. Glas (5), das eine Aufnahme (60) und eine Versiegelung (1) umfasst, wobei:
- das Glas wärmedämmend ist und mindestens zwei Glasscheiben (50, 51) umfasst, die mit einer Füllung (52) aus Gas oder Luft voneinander beabstandet sind, und ein Abstandshalter (53) die Glasscheiben voneinander trennt und gegenüber den Kanten (55, 56) der Glasscheiben derart zurückgesetzt angeordnet ist, dass eine Auskehlung realisiert wird, die die Aufnahme (60) darstellt, deren Boden eine Seite (58) des Abstandshalters bildet, und
- die Versiegelung (1) einen Körper (10) mit einer Längsachse X umfasst, der einen unteren Teil (20) enthält, der ein erstes Ende (21) und ein gegenüberliegendes zweites Ende (22), wobei zwei einander gegenüberliegende Seitenwände (23, 24) die beiden Enden (21, 22) miteinander verbinden, und zwei Vorsprünge (40, 41) aufweist, die sich jeweils auf einer Seite der zwei Seitenwände und an einem (21) der Enden befinden, die Versiegelung aus einem einzigen flexiblen Material gebildet ist, und entlang eines zur X-Achse quer verlaufenden Schnitts die Breite des unteren Teils von einer Seitenwand zur anderen in der Nähe des den Vorsprüngen (40, 41) gegenüberliegenden Endes (22) größer als die Breite des unteren Teils von einer Seitenwand zur anderen in der Nähe des Endes (21) bei den Vorsprüngen (40, 41) ist,
**dadurch gekennzeichnet, dass** der untere Teil (20) der-Versiegelung (1) von der die Aufnahme bildenden Auskehlung (60) aufgenommen und in dieser durch Zusammendrücken festgehalten wird, wobei die Vorsprünge (40, 41) auf den Kanten (55, 56) der Glasscheiben anliegend ruhen.

2. Glas und Versiegelung nach Anspruch 1, **dadurch gekennzeichnet, dass** der reine Querschnitt des unteren Teils, der entlang des quer zur X-Achse stehenden Schnitts und begrenzt von dem den Vorsprüngen gegenüberliegenden Ende (22), den Seitenwänden (23, 24) und einer Abschlusslinie L, die parallel zu den Enden (21, 22) verläuft und die Enden (23a, 24a) der Seitenwände an den Vorsprüngen (40, 41) verbindet, verläuft, in einen Referenzquerschnitt mit trapezoider Form einbeschrieben ist, dessen große Grundlinie mit dem den Vorsprüngen gegenüberliegenden Ende (22) und dessen kleine Grundlinie mit der Linie L übereinstimmt.

3. Glas und Versiegelung nach Anspruch 2, **dadurch gekennzeichnet, dass** der Querschnitt des unteren Teils trapezförmig ist.

4. Glas und Versiegelung nach Anspruch 2, **dadurch gekennzeichnet, dass** der Querschnitt des unteren Teils im Wesentlichen quadratisch oder rechteckig ist und die Enden (23a, 24a) der Seitenwände an den Vorsprüngen eine Materialausnahme zum Inneren der Versiegelung aufweisen.

5. Glas und Versiegelung nach Anspruch 2, **dadurch gekennzeichnet, dass** die zwei Seitenwände (23, 24) seitliche Ansätze (25) umfassen, die parallel zueinander, in Richtung der Vorsprünge (40, 41) geneigt und zu dem den Vorsprüngen gegenüberliegenden Ende (22) hin angeordnet sind.

6. Glas und Versiegelung nach einem der Ansprüche 1 bis 5, **dadurch gekennzeichnet, dass** der untere Teil (20) voll ist.

7. Glas und Versiegelung nach einem der Ansprüche 1 bis 5, **dadurch gekennzeichnet, dass** der untere Teil (20) einen Hohlraum (20a) enthält.

8. Glas und Versiegelung nach einem der vorhergehenden Ansprüche, **dadurch gekennzeichnet, dass** sie eine Dichtungslippe (30) umfasst, die sich ab dem Ende (21) des unteren Teils erstreckt und sich auf der Seite der Vorsprünge (40, 41) befindet.

9. Glas und Versiegelung nach Anspruch 8, **dadurch gekennzeichnet, dass** die Dichtungslippe (30) voll ist und einen länglichen und im Wesentlichen flachen Querschnitt hat.

10. Glas und Versiegelung nach Anspruch 8, **dadurch gekennzeichnet, dass** die Dichtungslippe (30) röhrenförmig ist.

11. Glas und Versiegelung nach einem der vorhergehenden Ansprüche, **dadurch gekennzeichnet, dass** die Vorsprünge (40, 41) an ihren freien Enden (40a, 41 a) eine Dicke aufweisen, die gegenüber derjenigen ihrer Anfangsteile (40b, 41 b) ab den Enden (23a, 24a) der Seitenwände kleiner ist.

12. Glas und Versiegelung nach einem der vorhergehenden Ansprüche, **dadurch gekennzeichnet, dass** die Shore-A-Härte des Materials des Körpers (10) 40 bis 60 beträgt.

13. Glas und Versiegelung nach Anspruch 12, **dadurch gekennzeichnet, dass** das Material ein Kunststoff vom Typ Silicon, Butylkautschuk, EPDM, Hypalon, natürlicher Kautschuk, Neopren, Nitril, Polybutadien, Polyisopren, Polyurethan, SBR und Viton ist.

14. Glas und Versiegelung nach einem der vorhergehenden Ansprüche, **dadurch gekennzeichnet, dass** der Körper (10) des unteren Teils wenigstens auf der Seite des den Vorsprüngen (40, 41) gegenüberliegenden Endes (22) eine Breite aufweist, die deutlich größer als die der Aufnahme (60) ist.

15. Glas und Versiegelung nach einem der vorhergehenden Ansprüche, **dadurch gekennzeichnet, dass** die Dichtungsmittel (54) gegenüber dem Inneren des Glases den Boden (58) der Auskehlung und gegebenenfalls einen Teil der Seitenwände (50a, 50b) der Auskehlung, die von den Innenflächen der Glasscheiben gebildete werden, bedecken, wobei der Körper des unteren Teils (20) der Versiegelung durch Reibung mit den Dichtungsmitteln (54) zusammenwirkt.

16. Glas und Versiegelung nach einem der vorhergehenden Ansprüche, **dadurch gekennzeichnet, dass** es gerade oder gebogen ist.

17. Kühlmöbel, das mindestens ein Glas und eine Versiegelung nach einem der Ansprüche 1 bis 16 umfasst.
